(19) Europäisches Patentamt
European Patent Office
Office européen des brevets

(11) **EP 3 786 220 A1**

(12) **EUROPEAN PATENT APPLICATION**
published in accordance with Art. 153(4) EPC

(43) Date of publication:
**03.03.2021 Bulletin 2021/09**

(51) Int Cl.:
*C08J 9/00* (2006.01)   *B32B 5/18* (2006.01)
*B32B 27/20* (2006.01)   *C08K 3/00* (2018.01)
*C08L 23/06* (2006.01)   *C08L 23/12* (2006.01)

(21) Application number: **19793387.2**

(22) Date of filing: **25.04.2019**

(86) International application number:
**PCT/JP2019/017617**

(87) International publication number:
**WO 2019/208692 (31.10.2019 Gazette 2019/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2018 JP 2018084916
14.02.2019 JP 2019024660**

(71) Applicant: **Yupo Corporation
Tokyo 101-0062 (JP)**

(72) Inventors:
• IIDA, Seiichiro
**Tokyo 101-0062 (JP)**
• ASHIKAGA, Mitsuhiro
**Kamisu-shi, Ibaraki 314-0102 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **STRETCHED POROUS FILM AND FILM FOR PRINTING**

(57)    Provided are a stretched porous film and a film for printing that give a small amount of carbon dioxide gas emissions and have slight curling. A stretched porous film formed by stretching a resin composition comprising at least a polyethylene resin and an inorganic filler at least in a uniaxial direction, the polyethylene resin comprises a plant-derived polyethylene resin.

Fig. 1

**Description**

Technical Field

The present invention relates to a stretched porous film and a film for printing.

Background art

Resin films have been conventionally widely used as printing paper for labels, wrapping paper, posters, calendars, catalogs, advertisements, and the like. Resin films, which particularly have excellent water resistance, are highly demanded as printing paper for posters and the like, which are often used outdoors.

As printing paper, for example, a multi-layer resin stretched film has been suggested in which an amorphous resin-containing layer and a surface layer containing a polyolefin-type resin are layered on a substrate layer including a polyolefin-type resin and an inorganic fine powder (e.g., see Patent Literature 1). The amorphous resin layer can prevent vehicles in ink attached to the surface layer from penetrating the substrate layer and thus waving due to swelling of the film from occurring.

Meanwhile, in order to get out of dependency on petroleum to thereby construct an environment where the amount of carbon dioxide gas emissions is low, as measures against global warming, a resin film has been suggested in which a fossil fuel-derived polyolefin is used in combination with a biomass-derived polyolefin (e.g., see Patent Literature 2).

Citation List

Patent Literature

    Patent Literature 1: Japanese Patent Laid-Open No. 2001-277449
    Patent Literature 2: Japanese Patent No. 6020976

Summary of invention

Technical Problem

However, the amount of carbon dioxide gas emissions in the process of producing resin films can be further reduced by improvements in materials to be used and film structures.

Such resin films, like posters and calendars, are rolled up after printed and retained in a cylindrical form for carriage or storage. Particularly, in a stretched resin film, the resin tends to be oriented when stretched. Thus, when the resin film is rolled up, curling is likely to occur. Depending on the environment conditions during storage and the like, curling may be unlikely to be eliminated even when the resin film is unrolled. It is difficult to display posters and the like if having large curling, and thus their handleability is lowered.

For producing and developing a resin film having slight curling even after rolled up, the present inventors have made various studies on materials and production processes for the resin film, film structures, and the like in order to reduce the amount of carbon dioxide gas emissions.

It is an object of the present invention to provide a stretched porous film and a film for printing that give a small amount of carbon dioxide gas emissions and have slight curling.

Solution to Problem

The present inventors have made intensive studies in order to solve the problem described above and have consequently found that a stretched film of a resin composition prepared by blending an inorganic filler with a polyethylene resin becomes porous and enables the amount of carbon dioxide gas emissions to be reduced and its curling to be smaller, and additionally that use of a plant-derived polyethylene resin as the polyethylene resin enables the amount of carbon dioxide gas emissions to be further reduced, thereby having completed the present invention.

That is, the present invention is as follows.

    (1) A stretched porous film formed by stretching a resin composition comprising at least a polyethylene resin and an inorganic filler at least in a uniaxial direction, wherein the polyethylene resin comprises a plant-derived polyethylene resin.

(2) The stretched porous film according to (1), wherein

the polyethylene resin is a mixture of the plant-derived polyethylene resin and a petroleum-derived polyethylene resin, and

the mass ratio between the plant-derived polyethylene resin and the petroleum-derived polyethylene resin in the mixture is 5:95 to 99:1.

(3) The stretched porous film according to (1) or (2), wherein

the content of the inorganic filler in the stretched porous film is 3 to 70% by mass.

(4) The stretched porous film according to any of (1) to (3), wherein

the resin composition further comprises a polypropylene resin.

(5) The stretched porous film according to (4), wherein

the mass ratio between the polyethylene resin and the polypropylene resin in the stretched porous film is 5:95 to 99:1.

(6) The stretched porous film according to any of (1) to (5), wherein

the stretched porous film has a porosity of 3 to 55%.

(7) The stretched porous film according to any of (1) to (6), having a multi-layer structure, wherein

at least one layer of the multi layers is a stretched porous film formed by stretching the resin composition comprising at least a polyethylene resin and an inorganic filler at least in a uniaxial direction.

(8) The stretched porous film according to any of (1) to (7), wherein

the stretched porous film formed by stretching the resin composition comprising at least a polyethylene resin and an inorganic filler at least in a uniaxial direction is a film stretched in biaxial directions.

(9) A film for printing, comprising:

the stretched porous film according to any of (1) to (8), and

a printability improving layer provided on at least one face of the stretched porous film.

Advantageous Effects of Invention

According to the present invention, there is provided a stretched porous film and a film for printing that give a small amount of carbon dioxide gas emissions and have slight curling.

Brief Description of Drawings

[Fig. 1] Fig. 1 is a cross-sectional view illustrating the configuration of a stretched porous film according to one embodiment of the present invention.

[Fig. 2] Fig. 2 is a cross-sectional view illustrating the configuration of a film for printing according to one embodiment of the present invention.

[Fig. 3] Fig. 3 is a cross-sectional view illustrating the configuration of a film for printing according to one embodiment of the present invention.

[Fig. 4] Fig. 4 is a view illustrating a method for evaluating a curling property.

Description of Embodiments

Hereinbelow, a stretched porous film and a film for printing according to the present invention will be described in detail. The description of each component described below is one example (representative example) in one embodiment of the present invention and is not specifically limited to the content thereof.

In the description below, the term "(meth)acryl" indicates both acryl and methacryl. The numerical ranges expressed with "to" means ranges including the numerical values indicated before and after "to" as lower limit value and upper limit value.

(Stretched Porous Film)

The stretched porous film of the present invention is a porous resin film formed by melting and kneading a resin composition comprising at least a polyethylene resin and an inorganic filler, forming the composition into a film, and stretching the obtained film at least in a uniaxial direction. The polyethylene resin used in the stretched porous film of the present invention comprises a plant-derived polyethylene resin. Plant-derived polyethylene resins, which have a negative carbon dioxide gas emission factor, can reduce the amount of carbon dioxide gas emissions per unit volume of the stretched porous film and contribute to a reduction in the environmental load. Further, in the stretched porous film of the present invention, the resin in the film has been replaced by an inorganic filler, which has a smaller carbon dioxide emission factor than that of the resin, and additionally, the porosity in the film has increased due to stretching of the film containing the inorganic filler. Thus, there is provided a stretched porous film that gives a smaller amount of carbon dioxide gas emissions per unit volume of the film in the film production process.

Meanwhile, among resin materials from which films can be formed, a polyethylene resin has a relatively low elastic modulus (such as flexural elastic modulus) and is thus effective for improving the curling property. In a porous film made of this, the resin component is reduced in the matrix and thus the curling property can be further improved. According to such a porous film, it is a stretched film in which curling easily occurs due to the orientation of the resin, and even if it has a curl, it is easy to recover the original flat state due to its own weight, external force or the like. It was found that a porous stretched film with a small curl can be obtained.

As resin components constituting the stretched porous film of the present invention, a polyethylene resin and a polypropylene resin can be used in combination. A polypropylene resin, when used singly, is not suitable for improving the curling property because of being harder than a polyethylene resin. However, because of being hard, such a polypropylene resin is characteristic of being likely to form many pores as a result of stretch-molding. In view of this characteristic, further enhancing the porosity of the stretched film by the combination use of polypropylene resin enables the amount of carbon dioxide gas emissions per unit volume of products to be reduced and curling to be slighter.

When a polyethylene resin and a polypropylene resin are used in combination as resin components constituting the film, it is preferred to select a polyethylene resin having a melt flow rate (MFR) close to that of the polypropylene resin, as the polyethylene resin used in combination with the polypropylene resin, in view of preventing phase separation during melting as far as possible.

With respect to selection of this polyethylene resin, a stretched porous film having slighter curling is likely to be obtained by combination of polyethylene resins each having a melt flow rate in accordance with JIS K7210:2014 within a specific range, which is different from the specific range of other polyethylene resins. For example, combining a polyethylene resin having a melt flow rate of 9 to 20 g/10 min (relatively high flowability) and a polyethylene resin having a melt flow rate of 2 to 8 g/10 min (a melt flow rate close to that of the polypropylene resin) and selecting a petroleum-derived polyethylene resin as the former and a plant-derived polyethylene resin as the latter is preferred because curling of the stretched porous film can be further reduced. Use of a plant-derived polyethylene resin as one polyethylene resin to be used in combination reduces the amount of the petroleum-derived polyethylene resin to be used as much as possible, reduces the amount of carbon dioxide gas emissions, and thus can contribute to an environment improvement.

The stretched porous film of the present invention may have a single-layer structure only of the stretched film of the resin composition described above or may have a multi-layer structure including at least one layer of the stretched film of the resin composition described above. In the case of the multi-layer structure, various functions can be imparted by each of the layers. For example, the stretched porous film can have a surface layer on the stretched film of the resin composition described above, in view of improving the film strength. The stretched porous film may be a laminate of a plurality of stretched films of the resin composition described above.

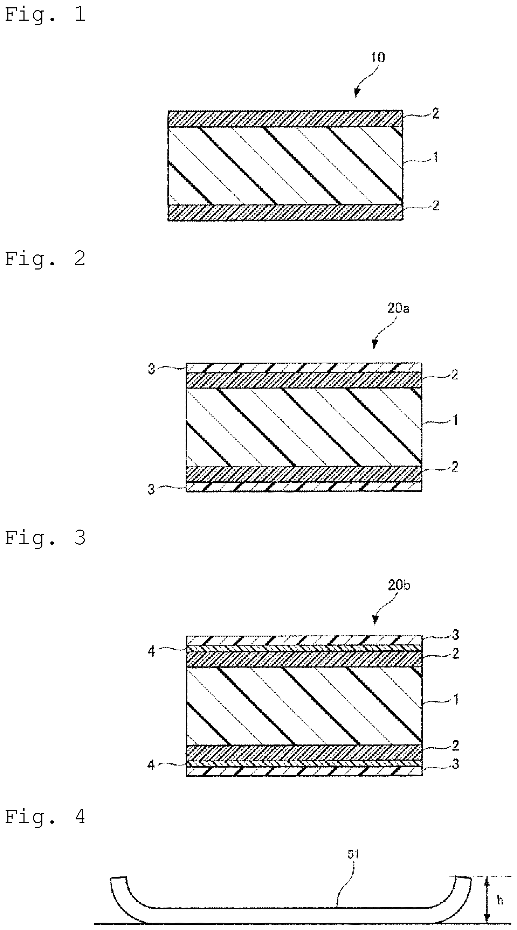

Fig. 1 illustrates one exemplary structure of a stretched porous film having a multi-layer structure.

As shown in Fig. 1, a stretched porous film 10 has a stretched porous film 1 formed by stretching a resin composition comprising at least a polyethylene resin and an inorganic filler at least in a uniaxial direction, and surface layers 2 laminated on both the faces of the stretched porous film 1.

<Polyethylene Resin>

The polyethylene resin used in the stretched porous film of the present invention comprises a plant-derived polyethylene resin, as mentioned above. The plant-derived polyethylene resin is an ethylene polymer prepared by using ethylene of which raw material is plant-derived as the monomer. The plant used as the raw material has absorbed carbon dioxide gas in its growing stage, and thus has a smaller carbon dioxide gas emission factor in the production process of the plant-derived polyethylene resin than that of a petroleum-derived polyethylene resin, which has not absorbed such carbon dioxide gas. For this reason, use of a plant-derived polyethylene resin enables the amount of carbon dioxide gas emissions to be reduced.

<<Plant-derived Polyethylene Resin>>

The plant-derived polyethylene resin that can be used for the stretched porous film may be any plant-derived ethylene polymer, and examples thereof include high-density polyethylene resins, medium-density polyethylene resins, linear low-density polyethylene resins, and copolymers mainly based on ethylene, similarly to petroleum-derived polyethylene resins. The plant-derived ethylene can be produced by dehydration of ethanol produced from fermentation of biomass derived from plants such as sugarcane or corn. In the case where the plant-derived polyethylene resin contains an α-olefin such as 1-butene, 1-hexene, or 1-octene as a comonomer, these α-olefins may be α-olefins manufactured by a method based on derivation from a plant or may be petroleum-derived α-olefins.

Examples of the plant-derived high-density polyethylene resin include SHC7260 (MFR: 7.2 g/10 min, density: 0.959 g/cm$^3$), SHD7255LSL (MFR: 4.5 g/10 min, density: 0.954 g/cm$^3$), and SGE7252 (MFR: 2.2 g/10 min, density: 0.953 g/cm$^3$) manufactured by Braskem S.A. The MFRs of the products of Braskem S.A. described above are measurement values in accordance with JIS K7210:2014, and the densities are measurement values in accordance with ASTM D1505/D 792.

As long as containing the plant-derived polyethylene resin mentioned above, the polyethylene resin used in the stretched porous film of the present invention may be a mixture of a plant-derived polyethylene resin and a petroleum-derived polyethylene resin. The petroleum-derived polyethylene resin is an ethylene polymer prepared by using ethylene of which raw material is petroleum as the monomer. A petroleum-derived polyethylene resin can be used in combination for suitably improving the curling property and stretch-moldability of the stretched porous film or for reducing the manufacture cost of the stretched porous film.

<<Petroleum-derived Polyethylene Resin>>

Examples of the petroleum-derived polyethylene resin that can be used in the stretched porous film include high-density polyethylene resins, medium-density polyethylene resins, linear low-density polyethylene resins, copolymers mainly based on ethylene and prepared by copolymerizing with an α-olefin such as propylene, butene, hexene, heptene, octene, or 4-methylpentene-1, maleic acid-modified ethylene - vinyl acetate copolymers, ethylene - vinyl acetate copolymers, ethylene - acrylic acid copolymers, ethylene - alkyl acrylate copolymers, ethylene - alkyl methacrylate copolymers, metal salts of ethylene - methacrylic acid copolymers (the metal is zinc, aluminum, lithium, sodium, potassium, or the like), ethylene - cyclic olefin copolymers, and maleic acid-modified polyethylene resins.

While the petroleum-derived polyethylene resin contains no radioactive carbon having a mass number of 14 (14C), the plant-derived polyethylene resin contains 14C. Thus, both resins can be distinguished from each other. The proportion of plant-derived carbon (degree of plant derivation) can be measured based on the content of 14C.

Petroleum-derived and plant-derived polyethylene resins can be produced in the same manner except for the difference between petroleum or plant used as the raw material. For their production, a catalyst for polymerization reactions is generally used, such as a Ziegler-Natta catalyst, a metallocene catalyst or the like.

As the petroleum-derived and plant-derived polyethylene resins, high-density polyethylene resins having a density of 0.950 to 0.965 g/cm$^3$ are preferred in view of film moldability.

The petroleum-derived and plant-derived high-density polyethylene resins may be commercially available products. Examples of the petroleum-derived high-density polyethylene resin include Novatec (R) HD HJ580N (MFR: 12 g/10 min, density: 0.960 g/cm$^3$) and HJ490 (MFR: 20 g/10 min, density: 0.958 g/cm$^3$) manufactured by Japan Polyethylene Corporation. The MFR's of the products of Japan Polyethylene Corporation described above are measurement values in accordance with JIS K7210:2014, and the densities are measurement values in accordance with JIS K7112.

The mass ratio between the plant-derived polyethylene resin and the petroleum-derived polyethylene resin in a mixture is preferably 5:95 to 99:1. In view of further reducing the amount of carbon dioxide gas emissions and further improving the effect of preventing curling, the ratio of the content of the plant-derived polyethylene resin is preferably high. As for the lower limit value of the content of the plant-derived polyethylene resin in the mass ratio, the mass ratio is more preferably 7:93 and even more preferably 30:70. Meanwhile, as for the upper limit value of the content of the plant-derived polyethylene resin in the mass ratio, the mass ratio may be 95:5 because the plant-derived polyethylene resin is still expensive.

The melt flow rate in accordance with JIS K7210:2014 (temperature: 190°C, 2.16 kg load) of the petroleum-derived polyethylene resin in the mixture is preferably 9 to 20 g/10 min, and the same melt flow rate of plant-derived polyethylene resin is preferably 2 to 8 g/10 min.

A polypropylene resin may be used in combination with a polyethylene resin, as mentioned below. In the case of the combination use, a polyethylene resin having a melt flow rate close to that of the polypropylene resin is usually selected as the polyethylene resin in view of preventing phase separation during melting. However, the studies of the present inventors have revealed that a stretched porous film having slight curling is easily obtained by combining polyethylene resins that each have melt flow rates in different specific ranges as measured in accordance with JIS K7210:2014. Specifically, when polyethylene resins each having a melt flow rate of 9 to 20 g/10 min and of 2 to 8 g/10 min are used in combination, it is likely to reduce curling of the stretched porous film.

<Polypropylene Resin>

The stretched porous film preferably contains a polypropylene resin in addition to a polyethylene resin. As mentioned above, it is likely to obtain a stretched porous film that gives a small amount of carbon dioxide gas emissions and has slight curling by using the polypropylene resin in combination. When a polypropylene resin from which a film strength is easily obtained and a polyethylene resin that is more easily melted than the polypropylene resin are used in combination, the polypropylene resin becomes easily stretched in a melted state, and thus, a fibrillar stretched porous film is easily formed.

Examples of the polypropylene resin that can be used in the stretched porous film include propylene homopolymers such as isotactic homopolypropylene resins and syndiotactic homopolypropylene resins prepared by homopolymerizing propylene, and propylene copolymers mainly based on propylene and prepared by copolymerizing an $\alpha$-olefin such as ethylene, 1-butene, 1-hexene, 1-heptene, 1-octene, or 4-methyl-1-pentene or the like. The propylene copolymer may be a bipolymer or a multi-copolymer such as a terpolymer or higher, and may be a random copolymer or block copolymer.

Specific examples of the polypropylene resin include propylene homopolymers, propylene - ethylene copolymers, propylene - 1-butene copolymers, propylene - ethylene - 1-butene copolymers, propylene - 4-methyl-1-pentene copolymers, propylene - 3-methyl-1-pentene copolymers, and propylene - ethylene - 3-methyl-1-pentene copolymers.

The melt flow rate of the polypropylene resin in accordance with JIS K7210:2014 (temperature: 230°C, 2.16 kg load) is preferably 0.2 to 20 g/10 min, more preferably 1 to 10 g/10 min, and even more preferably 2 to 6 g/10 min, in view of enhancing the mechanical strength of the stretched porous film.

The mass ratio between the polyethylene resin and the polypropylene resin (polyethylene resin:polypropylene resin) in the stretched porous film is preferably 5:95 to 99:1, more preferably 7:93 to 90:10, and even more preferably 10:90 to 35:65, in view of formability of pores.

<Inorganic Filler>

By stretching the resin composition including an inorganic filler, a stretched porous film including many pores can be obtained. The proportion of the resin in the film is reduced by means of the pores to thereby enable the amount of carbon dioxide gas emissions per unit volume of the stretched porous film to be reduced.

Examples of the inorganic filler that can be used in the stretched porous film include heavy calcium carbonate, light calcium carbonate, titanium oxide, calcined clay, talc, barium sulfate, aluminum sulfate, silica, zinc oxide, magnesium oxide, and diatomaceous earth. Blending the inorganic filler facilitates formation of a porous film including pores therein. Of these, heavy calcium carbonate, clay, or diatomaceous earth is preferred because of having satisfactory pore formability and being inexpensive.

The average particle size of the inorganic filler is preferably 0.01 $\mu$m or more and more preferably 0.05 $\mu$m or more, in view of ease of pore formation. In view of improving the strength of the stretched porous film, the average particle size of the inorganic filler is preferably 10 $\mu$m or less and more preferably 8 $\mu$m or less. Thus, the average particle size of the inorganic filler is preferably 0.01 to 10 $\mu$m and more preferably 0.05 to 8 $\mu$m.

The average particle size of the inorganic filler described above is a volume-average particle size measured with a laser diffraction particle size distribution analyzer.

The content of the inorganic filler in the stretched porous film is preferably 3% by mass or more, more preferably 5% by mass or more, and even more preferably 10% by mass or more, in view of enhancing the porosity to reduce the amount of carbon dioxide gas emissions. In view of improving the strength of the stretched porous film, the content of the inorganic filler described above is preferably 70% by mass or less, more preferably 60% by mass or less, and even more preferably 50% by mass or less. Thus, the content of the inorganic filler described above is preferably 3 to 70% by mass, more preferably 5 to 60% by mass, and even more preferably 10 to 50% by mass.

<Porosity>

With a larger porosity of the stretched porous film, the proportion of the resin in the stretched porous film can be reduced to thereby reduce the amount of carbon dioxide gas emissions. Accordingly, the porosity of the stretched porous film is preferably 3% or more, more preferably 5% or more, and even more preferably 10% or more. In view of imparting mechanical strength such as tear resistance, the porosity of the stretched porous film is preferably 55% or less, more preferably 45% or less, and even more preferably 42% or less. Thus, the porosity of the stretched porous film is preferably 3 to 55%, more preferably 5 to 45%, and even more preferably 10 to 42%. The porosity can be adjusted by means of the average particle size of the filler, the composition of the thermoplastic resin film containing the filler, for example, the ratio between the polypropylene resin and the polyethylene resin, and stretching conditions such as stretching temperature and stretching ratio.

The porosity described above can be obtained from the ratio of the area occupied by pores in a predetermined region in the cross section of a film to be measured, which is observed with an electron microscope. Specifically, any portion of the film to be measured is cut off, and the portion is embedded and solidified in an epoxy resin. The film to be measured is cut perpendicularly to the face direction of the film using a microtome and affixed to a sample observation stage such that the cut face becomes a face to be observed. Gold, gold - palladium, or the like is vapor-deposited on the face to be observed. The pores in the film are observed in an electron microscope at any magnification that facilitates the observation (e.g., magnification of 500 times to 3000 times), and the region observed is captured as image data. The image data obtained is subjected to image processing in an image analyzer, and a ratio of the area of pore portion in the predetermined region of the film (%) is determined as the porosity (%). In this case, the found values obtained from observation of arbitrary 10 or more points are averaged, and the averaged value can be taken as the porosity.

<Other Additives>

The stretched porous film can contain additives including a heat stabilizer (antioxidant), a light stabilizer, a dispersant, a slip agent, and the like as required. The stretched porous film, when containing a heat stabilizer, usually contains 0.001 to 1% by mass of a heat stabilizer. Examples of the heat stabilizer include steric hindrance phenol-based, phosphorus-based, and amine-based stabilizers. The stretched porous film, in which a light stabilizer is used, usually contains 0.001 to 1% by mass of the light stabilizer. Examples of the light stabilizer include steric hindrance amino-based, benzotriazole-based, and benzophenone-based light stabilizers. A dispersant or a slip agent can be used, for example, in order to disperse the inorganic filler. The amount of the dispersant or the slip agent to be used is usually in the range of 0.01 to 4% by mass. Examples of the dispersant or the slip agent include silane coupling agents, higher fatty acids such as oleic acid and stearic acid, metal soap, polyacrylic acid, polymethacrylic acid, and salts thereof.

The stretched porous film is stretched at least in a uniaxial direction, but in view of improving the porosity and mechanical strength of the film, the film is preferably a stretched film stretched in biaxial directions. The increased porosity can further reduce the amount of carbon dioxide gas emissions per unit volume of the stretched porous film.

(Surface Layer)

The surface layer is preferably a thermoplastic resin film, and in particular, more preferably a thermoplastic resin film containing a polypropylene resin. The strength of the stretched porous film can be improved by such a surface layer to thereby improve tear resistance and the like. The surface layer can be provided on one face or both the faces of the stretched porous film described above.

The polypropylene resin used in the surface layer is not particularly limited, and examples thereof include polypropylene resins same as those in the stretched porous film described above. One of the polypropylene resins may be used singly or two or more of those may be used in combination. In view of improving the mechanical strength, as the polypropylene resin used in the surface layer, polypropylene resins having a melting point (peak temperature in the DSC curve) of 130 to 210°C is preferred. Particularly, more preferred is a propylene homopolymer having a melting point (peak temperature in the DSC curve) of 155 to 174°C, a melt flow rate in accordance with JIS K7210:2014 of 0.5 to 20 g/10 min, and a degree of crystallinity of 45 to 70%.

The surface layer can contain a polyethylene resin, an inorganic filler, and the like besides the polypropylene resin. Examples of the polyethylene resin that can be used in the surface layer include polyethylene resins same as those in the stretched porous film. The polyethylene resin may be a petroleum-derived one or a plant-derived one, and both the polyethylene resins may be used in combination. The polyethylene resin preferably contains a plant-derived one because of being capable of contributing to an improvement in the environment.

Examples of the inorganic filler that can be used in the surface layer include inorganic fillers same as the inorganic fillers that can be used in the stretched porous film and additionally precipitated calcium carbonate. The surface of the inorganic filler may be treated with a surface treatment agent. Examples of the surface treatment agent that can be preferably used include resin acids, fatty acids, organic acids, sulfate type anionic surfactants, sulfonic acid type anionic surfactants, petroleum resin acids, salts thereof such as sodium salt, potassium salt, and ammonium salt, fatty acid esters thereof, resin acid esters, waxes, and paraffins, and additionally nonionic surfactants, diene-based polymers, titanate-based coupling agents, silane-based coupling agents, and phosphoric acid-based coupling agents. Examples of the sulfate type anionic surfactants include long-chain alcohol sulfates, polyoxyethylene alkyl sulfates, sulfated oils, and salts thereof such as sodium salt and potassium salt. Examples of sulfonic acid type anionic surfactants include alkylbenzenesulfonic acids, alkylnaphthalenesulfonic acids, paraffinsulfonic acids, $\alpha$-olefinsulfonic acids, alkylsulfosuccinic acids, and salts thereof such as sodium salt and potassium salt. Examples of the fatty acids include caproic acid, caprylic acid, pelargonic acid, capric acid, undecane acid, lauric acid, myristic acid, palmitic acid, stearic acid, hebenic acid, oleic acid, linoleic acid, linolenic acid, and eleostearic acid. Examples of the organic acids include maleic acid and sorbic acid. Examples of the diene-based polymers include polybutadiene and isoprene. Examples of the nonionic surfactants include polyethylene resin glycol ester type surfactants. These surface treatment agents may be used singly or in combination of two or more thereof.

The average particle size of the inorganic filler used in the surface layer is preferably 0.01 to 6 $\mu$m, more

preferably 0.05 to 4 $\mu$m, and even more preferably 0.07 to 2 $\mu$m.

With a thicker surface layer, the strength of the stretched porous film is more likely to be improved. Thus, the thickness of the surface layer is preferably 1 $\mu$m or more and more preferably 1.5 $\mu$m or more. With a thinner surface layer, the handleability as a sheet is more likely to be improved. Thus, the thickness of the surface layer is preferably 100 $\mu$m or less and more preferably 50 $\mu$m or less. Thus, the thickness of the surface layer is preferably 1 to 100 $\mu$m and more preferably 1.5 to 50 $\mu$m.

The stretched porous film can have a layer other than the surface layer according to the applications or functions of the stretched porous film. For example, in order to impart a texture of pulp paper to the stretched porous film, a polypropylene resin film containing 8 to 55% by mass of the inorganic filler can be provided as an intermediate layer between the stretched porous film and the surface layer. The stretched porous film may be provided with a printability improving layer on at least one surface layer, as in a film for printing mentioned below, or may be provided with a solvent attack preventing layer between the surface layer and the printability improving layer.

(Method for Producing Stretched Porous Film)

The method for producing a stretched porous film of the present invention is not particularly limited, and the film can be produced by a routine method. Examples of the method include cast molding to extrude a molten resin through a T die, I die, or the like connected to a screw type extruder into a sheet, calendaring, rolling, and inflation molding. In the case where a stretched porous film having a multi-layer structure in which a surface layer and the like are laminated is produced, a stretched porous film having a single-layer structure is produced, and then, other layers such as a surface layer can be laminated by a lamination process. Alternatively, film molding and lamination of each layer can be performed in parallel using a routine approach such as a multi-layer die process including use of a feed block and a multi-manifold or an extrusion lamination process including use of a plurality of dies.

The stretched porous film may be formed by stretching before the surface layer and the like are laminated or by stretching after the lamination. The surface layer, which is thin, is preferably not stretch-molded in a single layer, but is stretched after laminated on the stretched porous film. As mentioned above, the stretched porous film that is a biaxially-stretched layer is preferable for increasing the porosity to thereby enable the amount of carbon dioxide gas emissions to be further reduced and the mechanical strength to be higher. The stretched porous film or the surface layer that is a uniaxially-stretched layer is preferable for easily forming a fibrillar surface and improving penetrability of ink.

Examples of the stretching method include a longitudinal stretching method utilizing the difference in the circumferential speeds among a group of rollers, a transverse stretching method using a tenter oven, a successive biaxially stretching method in which these method are combined, a rolling method, a simultaneous biaxial stretching method by a combination of a tenter oven and a pantograph, and a simultaneous biaxial stretching method by a combination of a tenter oven and a linear motor. It is also possible to use a simultaneous biaxial stretching method in which a molten resin is extruded into a tube shape using a circular die connected to a screw type extruder and then air is blown into the tube (inflation molding) and the like.

In the case where the thermoplastic resin to be used is an amorphous resin, the stretching temperature at which stretching is performed is preferably in the range equal to or higher than the glass transition point temperature of the thermoplastic resin. The stretching temperature in the case where the thermoplastic resin is a crystalline resin is preferably in the range of the glass transition point of the amorphous portion of the thermoplastic resin or higher and the melting point of the crystalline portion of the thermoplastic resin or lower, and preferably a temperature lower than the melting point of the thermoplastic resin by 2 to 60°C. Specifically, a stretching temperature of 100 to 164°C is preferred in the case of a propylene homopolymer (melting point: 155 to 167°C), and a stretching temperature of 70 to 133°C is preferred in the case of a high-density polyethylene resin (melting point: 121 to 134°C).

The stretching speed is not particularly limited, but, in view of stable stretch-molding, is preferably in the range of 20 to 350 m/min.

The stretching ratio also can be determined appropriately in consideration of the characteristics of the thermoplastic resin used and the like. For example, in the case where a propylene homopolymer or a propylene copolymer is used, as for the stretching ratio when the stretching is performed in one direction, usually, the lower limit is about 1.2 times or more and preferably 2 times or more, and the upper limit is 12 times or less and preferably 10 times or less. As for the stretching ratio in the case of biaxial stretching in terms of an area stretching ratio, usually, the lower limit is 1.5 times or more and preferably 4 times or more, and the upper limit is 60 times or less and preferably 50 times or less. As for the stretching ratio in the case where other thermoplastic resin film is stretched in one direction, the lower limit is usually 1.2 times or more and preferably 2 times or more, and the upper limit is 10 times or less and preferably 5 times or less. As for the stretching ratio in the case of biaxial stretching in terms of an area stretching ratio, usually, the lower limit is 1.5 times or more and preferably 4 times or more, and the upper limit is 20 times or less and preferably 12 times or less. Within the range of the stretching ratio described above, the intended porosity and grammage are likely to be achieved, and the opacity is likely to be improved. Additionally, the film is unlikely to be broken, and stretch-molding is likely to be stabilized.

(Characteristics of Stretched Porous Film)

Printing or writing can be made on the outermost surface of the stretched porous film described above. Examples of printing methods that can be used include an electrophotographic recording method, a sublimation thermal transfer method, a melt thermal transfer method, a direct thermal method, and additionally, letterpress printing, gravure printing, flexographic printing, solvent type offset printing, and ultraviolet curing-type offset printing. Printing can be made also by a sheet-type or roll-type rotary method.

<Thickness>

The thickness of the stretched porous film is preferably 50 $\mu$m or more, more preferably 60 $\mu$m or more, and even more preferably 70 $\mu$m or more, in view of imparting mechanical strength such as tear resistance. In view of imparting lightness in handling the stretched porous film as a sheet for a poster, calendar, or the like, the thickness of the stretched porous film is preferably 500 $\mu$m or less, more preferably 450 $\mu$m or less, and even more preferably 400 $\mu$m or less. Thus, the thickness of the stretched porous film is preferably 50 to 500 $\mu$m, more preferably 60 to 450 $\mu$m, and even more preferably 70 to 400 $\mu$m.

<Curling Property>

A stretched porous film having slighter curling, after rolled up and then unrolled, has improved availability as a sheet because its handleability during storage or use is excellent. Specifically, the found value for the curling property of the stretched porous film determined by the method described below is preferably 40 mm or less and more preferably 35 mm or less. In view of imparting sufficient stiffness (rigidity) to the stretched porous film, the evaluation value for the curling property of the stretched porous film is preferably 5 mm or more and more preferably 10 mm or more. Thus, the evaluation value for the curling property of the stretched porous film is preferably 5 to 40 mm and more preferably 10 to 35 mm.

<Method for Evaluating Curling Property>

The stretched porous film is cut to obtain a sheet having a size of 636 mm $\times$ 469 mm. The sheet obtained is rolled up in the longitudinal direction into a cylindrical shape having an outer diameter of 55 mm and left under an environment at a temperature of 23°C and a relative humidity of 50% for 24 hours. Then, the cylindrical sheet is unrolled on a horizontal plane such that the face inside in the radial direction faces upward. The heights at the four corners of the sheet after a lapse of one hour under the environment at a temperature of 23°C and a relative humidity of 50% are measured, and the average value of the heights at the four corners is taken as the found value for the curling property.

(Film for Printing)

The film for printing of the present invention has the stretched porous film described above and a printability improving layer on at least one face of the stretched porous film described above. The stretched porous film itself can be used as printing paper as mentioned above, but the film for printing having a printability improving layer has a high adhesion to ink and superior printability. The film for printing may have other layers as long as having the stretched porous film and the printability improving layer. For example, the film for printing can have a solvent attack preventing layer between the printability improving layer and the stretched porous film.
Fig. 2 illustrates an exemplary configuration of a film for printing.
In a film for printing 20a illustrated in Fig. 2, a printability improving layer 3 is laminated on each of both faces of a stretched porous film 10.
Fig. 3 illustrates an exemplary configuration of a film for printing provided with a solvent attack preventing layer.
A film for printing 20b illustrated in Fig. 3 has a solvent attack preventing layer 4 between the stretched porous film 10 and each printability improving layer 3 provided on both the faces thereof.

<Printability Improving Layer>

The printability improving layer is provided on the outermost position of the film for printing, in view of improving the suitability to various printing methods. Examples of the printing methods that can be used include the same printing methods as for the stretched porous film. Printing can be made also by a sheet-type or roll-type rotary method.

The printability improving layer may be a thermoplastic resin film containing an inorganic filler and the like, provided on the stretched porous film by a method such as coextrusion or extrusion lamination, or may be a resin layer containing a binder resin, a pigment, and the like, provided on the stretched porous film by a coating method.

In the case where the printability improving layer is a thermoplastic resin film containing the inorganic filler described above and the like, the types of the thermoplastic resin and the inorganic filler that can used are not particularly limited. For example, the polypropylene resin or polyethylene resin exemplified for the stretched porous film can be used as the thermoplastic resin. As the thermoplastic resin used in the printability improving layer, resins having a melting point (peak temperature in the DSC curve) of 130 to 210°C are more preferred. Particularly, preferred are propylene homopolymers having a melting point (peak temperature in the DSC curve) of 155 to 174°C, a melt flow rate in accordance with JIS K7210:2014 of 0.5 to 20 g/10 min, and a degree of crystallinity of 45 to 70%. For the printability improving layer, one of the polypropylene resin or polyethylene resin exemplified for the stretched porous film may be selected and used, or two or more of these may be used in combination.

Examples of the inorganic filler used in the printability improving layer include inorganic fillers same as those in the surface layer. The surface of the inorganic filler may be treated with the surface treatment agent mentioned above. Particularly, in view of improving the printing suitability, heavy calcium carbonate, precipitated calcium carbonate, or an inorganic filler prepared by surface treating these is preferred. Alternatively, calcined clay or diatomaceous earth are preferred because of being inexpensive and having satisfactory pore formability in stretching. The average particle size of the inorganic filler is preferably 0.01 to 6 $\mu$m, more preferably 0.05 to 4 $\mu$m, and even more preferably 0.07 to 2 $\mu$m.

In the case where the printability improving layer is the resin layer containing a binder resin and a pigment described above, the types of the binder resin and the pigment that can be used are not particularly limited. Examples of the binder resin include vinyl acetate-based resins such as ethylene - vinyl acetate copolymer emulsions, ethylene - vinyl acetate - vinyl chloride copolymer emulsions, and vinyl acetate - (meth)acrylate copolymer emulsions; latexes such as styrene - acrylic acid-based resin, SBR (styrene - butadiene copolymer rubber), and MBR (methacrylate - butadiene copolymer rubber); resin emulsions such as ester-based resin emulsions, normal temperature-crosslinkable acryl-based resin aqueous emulsions, and urethane resin aqueous emulsions; and water-soluble resins such as starch, methyl cellulose, CMC (carboxymethyl cellulose), PVA (polyvinyl alcohol), and polyvinylpyrrolidone. One of these binder resins may be used singly, or two or more of these may be used in combination.

Examples of the pigment include inorganic fillers and organic fillers. An inorganic filler and an organic filler may be used in combination. Examples of the inorganic filler include fine powders such as heavy calcium carbonate, light calcium carbonate, magnesium carbonate, white clay, titanium white, silica, calcium silicate, barium sulfate, calcium sulfate, titanium oxide, alumina, aluminum hydroxide, calcium hydroxide, zinc hydroxide, zinc oxide, kaolin, clay, and talc. Examples of the organic filler include plastic pigments such as acryl resin particles, styrene resin particles, urea formalin resin particles, and hollow resin particles.

The content of the inorganic filler or organic filler in the printability improving layer is preferably 15 parts by mass or more and more preferably 25 parts by mass or more based on 100 parts by mass of the thermoplastic resin or binder resin in the printability improving layer, in view of imparting the quick-drying property of ink. In view of preventing the filler from dropping off, the same content is preferably 450 parts by mass or less and more preferably 400 parts by mass or less based on 100 parts by mass of the thermoplastic resin or binder resin in the printability improving layer.

The printability improving layer can contain aids as long as the effects of the present invention are not compromised, besides the thermoplastic resin, binder resin, inorganic filler or organic filler mentioned above. Examples of the aids include, but are not particularly limited to, an antioxidant, a heat stabilizer, a light stabilizer, an ultraviolet absorber, a dispersant, a crosslinking agent, an antistatic agent, a slip agent, a nucleating agent, a plasticizer, a colorant, and a fluorescent brightening agent.

The printability improving layer may be a stretched film, which similarly to the stretched porous film mentioned above or the surface layer mentioned above or the solvent attack preventing layer mentioned below, or may be an unstretched film.

The thickness of the printability improving layer is preferably 1 $\mu$m or more, more preferably 2 $\mu$m or more, and even more preferably 4 $\mu$m. or more in view of the ink drying property. In view of moldability of the printability improving layer, the thickness of the printability improving layer is preferably 20 $\mu$m or less or more preferably 15 $\mu$m. or less. Thus, the thickness of the printability improving layer is preferably 1 to 20 $\mu$m, more preferably 2 to 20 $\mu$m, and even more preferably 4 to 15 $\mu$m.

<Solvent Attack Preventing layer>

A solvent attack preventing layer can be provided between the printability improving layer and the stretched porous film, in view of preventing solvent attack, which is a phenomenon where the solvent in ink attached to the printability improving layer as the result of printing reaches the stretched porous film to thereby cause swelling of the entire film.

The solvent attack preventing layer is preferably a resin film containing 0 to 85% by mass of a polyolefin resin and 15 to 100% by mass of an amorphous resin, in view of effectively preventing solvent attack.

The type of the polyolefin resin used in the solvent attack preventing layer is not particularly limited, and examples of the polyolefin resin include polyolefin resins used in the stretched porous film described above. As the polyolefin resin, a propylene homopolymer, a high-density polyethylene resin, or a mixture thereof is preferred. Of these, propylene homopolymers having a melting point (peak temperature in the DSC curve) of 155 to 174°C, a melt flow rate in accordance with JIS K7210:2014 of 0.5 to 20 g/10 min, and a degree of crystallinity of 45 to 70% can be suitably used. High-density polyethylene resins having a melting point (peak temperature in the DSC curve) of 120 to 135°C, a melt flow rate in accordance with JIS K7210:2014 of 0.2 to 20 g/10 min, a degree of crystallinity of 65 to 95%, and a density of 0.945 g/cm$^3$ or more also can be suitably used. One of the polyolefin resins used in the solvent attack preventing layer may be selected and used singly, or two or more of these may be selected and used in combination.

As the amorphous resin used in the solvent attack preventing layer, an amorphous resin having a glass transition temperature of 140°C or less is preferred, and an amorphous resin having a glass transition temperature of 70 to 140°C is more preferred. When the glass transition temperature of the amorphous resin is 70°C or more, sticking to rolls decreases to thereby facilitate an improvement in the moldability. When the glass transition temperature is 140°C or less, the numbers of pores formed during stretching decreases to thereby facilitate a decrease in the porosity, and solvent attack via the pores is likely to be prevented. In producing a film for printing having a solvent attack preventing layer, it is preferred that the temperature during stretching be higher than the glass transition temperature of the amorphous resin by 10°C or more.

Examples of the amorphous resin include cyclic olefin-type resins, atactic polystyrene, petroleum resins, polycarbonate, and acryl-based resins. One of these may be used singly, or two or more of these may be used in combination. Of these, cyclic olefin-type resins are preferably used, in view of preventing penetration of the solvent. As the cyclic olefin-type resin, preferred are the ring-opening polymer derived from a cyclic olefin-based monomer, hydrides of the ring-opening polymer or copolymer, copolymers of a cyclic olefin-based monomer represented by the general formula (1) and ethylene, and the like, described in Japanese Patent Laid-Open No. 2001-277449.

In the solvent attack preventing layer, the proportion of the polyolefin resin blended is 0 to 85% by mass, and the proportion of the amorphous resin blended is 15 to 100% by mass, in view of sufficiently preventing solvent attack. More preferably, the proportion of the polyolefin resin blended is 20 to 80% by mass, and the proportion of the amorphous resin blended is 20 to 80% by mass.

The porosity of the solvent attack preventing layer is preferably 5% or less and more preferably 3% or less, in view of reducing the solvent in ink (particularly, a high-boiling-point petroleum-based solvent, such as mineral oil) that passes through the pores to reach the stretched porous film. The solvent attack preventing layer may contain an inorganic filler as long as the porosity is in the range of 5% or less.

The solvent attack preventing layer may be a stretched film or may be an unstretched film.

The solvent attack preventing layer is preferably thicker in view of preventing penetration of the solvent, and preferably thinner in view of imparting moderate flexibility thereto. Specifically, the thickness of the solvent attack preventing layer is preferably 1 to 100 μm.

(Method for Producing Film for Printing)

The film for printing can be produced by forming the stretched porous film as mentioned above and laminating other layers thereon, or by simultaneously performing film molding and lamination of the stretched porous film and each layer. The stretched porous film may be formed by stretching before the other layers are laminated thereon or may be stretched after the lamination. As mentioned above, the stretched porous film is more preferably a biaxially-stretched layer.

(Characteristics of Film for Printing)

In the film for printing, printing or writing can be made on the printability improving layer or the surface layer located outermost, similarly to the stretched porous film.

<Thickness>

The thickness of the film for printing is preferably 51 μm or more, more preferably 75 μm or more, and even more preferably 100 μm or more, in view of imparting mechanical strength such as tear resistance. In view of imparting lightness in handling the film for printing as a poster sheet, calendar sheet, or the like, the thickness of the film for printing is preferably 500 μm or less, more preferably 450 μm or less, and even more preferably 400 μm or less. Thus, the thickness of the film for printing is preferably in the range of 51 to 500 μm, more preferably in the range of 75 to 450 μm, and even more preferably in the range of 100 to 400 μm.

<Curling Property>

The film for printing preferably has an evaluation value of the curling property comparable to that of the stretched porous film, in view of improving the handleability during use as a sheet for a poster, calendar, or the like.

Examples

Hereinbelow, the characteristics of the present invention will be concretely described with reference to Examples and Comparative Examples, but the present invention is not limited to these concrete Examples. In other words, the materials, amounts used, proportions, treatment contents, treatment procedures, and the like described in the following Examples can be changed appropriately without departing from the gist of the present invention.

(Example I)

<Resin Composition A>

A resin composition A was prepared by mixing 35 parts by mass of a high-density polyethylene resin of which raw material ethylene is plant-derived (trade name: HDPE SHC7260, manufactured by Braskem S.A.) and 65 parts by mass of heavy calcium carbonate particles (trade name: SOFTON 1800, manufactured by Bihoku Funka Kogyo Co., Ltd.) described in Table 1.
Then, the resin composition A was melted and kneaded in an extruder of which cylinder temperature was set to 230°C, and extruded into a strand shape. The extrudate after cooled was cut to obtain pellets of the resin composition A.

<Resin compositions B to E, O, P, and X to Z>

A high-density polyethylene resin of which raw material ethylene is plant-derived (trade name: HDPE SHC7260, manufactured by Braskem S.A.), a high-density polyethylene resin of which raw material ethylene is petroleum-derived (trade name: Novatec HD HJ580N, manufactured by Japan Polyethylene Corporation), and heavy calcium carbonate particles (trade name: SOFTON 1800, manufactured by Bihoku Funka Kogyo Co., Ltd.) described in Table 1 were weighed and mixed so as to achieve the blend ratios shown in Tables 2 and 3 to thereby prepare each of resin compositions B to E, O, P, and X to Z.
Then, each of the resin compositions was melted and kneaded in an extruder of which cylinder temperature was set to 230°C, and extruded into a strand shape. The extrudate after cooled was cut to obtain pellets of each of the resin compositions B to E, O, P, and X to Z.

<Resin composition F>

A resin composition F was prepared by mixing 10 parts by mass of a high-density polyethylene resin of which raw material ethylene is plant-derived (trade name: HDPE SHC7260, manufactured by Braskem S.A.), 67 parts by mass of a propylene homopolymer (trade name: Novatec PP MA3, manufactured by Japan Polypropylene Corporation), 22.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1.
Then, the resin composition F was melted and kneaded in an extruder of which cylinder temperature was set to 270°C, and extruded into a strand shape. The extrudate after cooled was cut to obtain pellets of the resin composition F.

<Resin compositions G to N, Q to W, AA, and AB>

A high-density polyethylene resin of which raw material ethylene is plant-derived (trade name: HDPE SHC7260, manufactured by Braskem S.A.), a high-density polyethylene resin of which raw material ethylene is petroleum-derived (trade name: Novatec HD HJ580N, manufactured by Japan Polyethylene Corporation), a propylene homopolymer (trade name: Novatec PP MA3, manufactured by Japan Polypropylene Corporation), a petroleum-derived ethylene-cyclic olefin copolymer (trade name: APEL 6011T, manufactured by Mitsui Chemicals, Inc.), heavy calcium carbonate particles (trade name: SOFTON 1800, manufactured by Bihoku Funka Kogyo Co., Ltd.), and titanium dioxide particles (trade name: TIPAQUE CR-60, manufactured by Ishihara Sangyo Kaisha, Ltd.) described in Table 1 were weighed and mixed so as to achieve the blend ratios shown in Tables 2 and 3 to thereby prepare each of resin compositions G to N, Q to W, AA, and AB.
Then, each of the resin compositions was melted and kneaded in an extruder of which cylinder temperature was set to 270°C, and extruded into a strand shape. The extrudate after cooled was cut to obtain pellets of each of the resin compositions G to N, Q to W, AA, and AB.

Table 1 shows the materials of each resin composition.

[Table 1]

| | Details of material | $CO_2$ emission factor [kg-$CO_2$/kg] | Abbreviation |
|---|---|---|---|
| Thermoplastic resin | High-density polyethylene (plant-derived raw material) Trade name: HDPE SHC7260, manufactured by Braskem S.A., MFR: 7.2g/10min, density: 0.959g/cm³ | -1.88 (from data presented by the manufacturer) | Plant-derived HDPE |
| | High-density polyethylene (petroleum-derived raw material) Trade name: Novatec HD HJ580N, manufactured by Japan Polyethylene Corporation, MFR: 12g/10min, density: 0.96g/cm³ | 1.33 (from CFP Basic Database (domestic)) | Petroleum-derived HDPE |
| | Propylene homopolymer (petroleum-derived raw material) Trade name: Novatec PP MA3, manufactured by Japan Polypropylene Corporation, MFR: 11g/10min, density: 0.90g/cm³ | 1.49 (from CFP Basic Database (domestic)) | PP homopolymer |
| | Ethylene - cyclic olefin copolymer (petroleum-derived raw material) Trade name: APEL 6011T, manufactured by Mitsui Chemicals, Inc., MFR: 26g/10min, density: 1.03g/cm³ | 1.49 (from CFP Basic Database (domestic)) | Petroleum-derived PE copolymer |
| Inorganic filler | Heavy calcium carbonate particles Trade name: SOFTON 1800, manufactured by Bihoku Funka Kogyo Co., Ltd., Average particle size: 1.25μm, density: 2.72g/cm³ | 0.14 (from data presented by the manufacturer) | Ca filler |
| | Rutile type titanium dioxide particles Trade name: TIPAQUE CR-60, manufactured by Ishihara Sangyo Kaisha, Ltd. Average particle size: 0.21μm, density: 4.23g/cm³ | 5.3 (from CFP Basic Database (domestic)) | Ti filler |

Tables 2 and 3 show blending of each resin composition.

[Table 2]

| Raw material used | Resin composition blend ratio [parts by mass] | | | | | | | | | | | | | |
|---|---|---|---|---|---|---|---|---|---|---|---|---|---|---|
| | A | B | C | D | E | F | G | H | I | J | K | L | M | N |
| Plant-derived HDPE | 35 | 77 | 0 | 52 | 25 | 10 | 5 | 4.5 | 0 | 2 | 20 | 0 | 11 | 5 |
| Petroleum-derived HDPE | 0 | 0 | 77 | 25 | 52 | 0 | 5 | 5.5 | 10 | 20 | 2 | 22 | 9 | 0 |
| PP homopolymer | 0 | 0 | 0 | 0 | 0 | 67 | 67 | 67 | 67 | 55 | 55 | 55 | 72 | 50 |
| Petroleum-derived PE copolymer | 0 | 0 | 0 | 0 | 0 | 0 | 0 | 0 | 0 | 0 | 0 | 0 | 0 | 0 |
| Ca filler | 65 | 23 | 23 | 23 | 23 | 22.5 | 23 | 22.5 | 22.5 | 23 | 23 | 23 | 8 | 45 |
| Ti filler | 0 | 0 | 0 | 0 | 0 | 0.5 | 0 | 0.5 | 0.5 | 0 | 0 | 0 | 0 | 0 |
| $CO_2$ emission factor (mass basis) [kg-$CO_2$/kg] | -0.57 | -1.42 | 1.06 | -0.61 | 0.25 | 0.87 | 1.00 | 1.04 | 1.19 | 1.08 | 0.50 | 1.14 | 1.00 | 0.71 |
| Inorganic filler content [% by mass] | 65 | 23 | 23 | 23 | 23 | 23 | 23 | 23 | 23 | 23 | 23 | 23 | 8 | 45 |
| Mass ratio between PE resin and PP resin (PE:PP) | 100:0 | 100:0 | 100:0 | 100:0 | 100:0 | 13:87 | 13:87 | 13:87 | 13:87 | 29:71 | 29:71 | 29:71 | 22:78 | 9:91 |
| Mass ratio between plant-derived and petroleum-derived PE resins (plant-derived: petroleum-derived) | 100;0 | 100:0 | 0:100 | 68:32 | 32:68 | 100:0 | 50:50 | 45:55 | 0:100 | 9:91 | 91:9 | 0:100 | 55:45 | 100:0 |
| True density of each resin composition [g/cm³] | 1.66 | 1.13 | 1.13 | 1.13 | 1.13 | 1.07 | 1.07 | 1.07 | 1.07 | 1.08 | 1.08 | 1.08 | 0.96 | 1.29 |

EP 3 786 220 A1

14

[Table 3]

| Raw material used | O | P | Q | R | S | T | U | V | W | X | Y | Z | AA | AB |
|---|---|---|---|---|---|---|---|---|---|---|---|---|---|---|
| | | | | | | | | | Resin composition blend ratio [parts by mass] | | | | | |
| Plant-derived HDPE | 8 | 9 | 6 | 6.5 | 3.5 | 0 | 0 | 0 | 0 | 0 | 0 | 0 | 0 | 0 |
| Petroleum-derived HDPE | 76 | 83 | 4 | 6.5 | 0 | 3.5 | 0 | 0 | 0 | 35 | 84 | 92 | 10 | 5 |
| PP homopolymer | 0 | 0 | 74 | 87 | 51.5 | 51.5 | 100 | 51 | 50 | 0 | 0 | 0 | 74 | 50 |
| Petroleum-derived PE copolymer | 0 | 0 | 0 | 0 | 0 | 0 | 0 | 49 | 0 | 0 | 0 | 0 | 0 | 0 |
| Ca filler | 16 | 8 | 16 | 0 | 44.5 | 44.5 | 0 | 0 | 49.5 | 65 | 16 | 8 | 16 | 45 |
| Ti filler | 0 | 0 | 0 | 0 | 0.5 | 0.5 | 0 | 0 | 0.5 | 0 | 0 | 0 | 0 | 0 |
| $CO_2$ emission factor (mass basis) [kg-$CO_2$/kg] | 0.88 | 0.95 | 1.07 | 1.26 | 0.79 | 0.90 | 1.49 | 1.49 | 0.84 | 0.56 | 1.14 | 1.23 | 1.26 | 0.87 |
| Inorganic filler content [% by mass] | 16 | 8 | 16 | 0 | 45 | 45 | 0 | 0 | 50 | 65 | 16 | 8 | 16 | 45 |
| Mass ratio between PE resin and PP resin (PE:PP) | 100:0 | 100:0 | 12:88 | 13:87 | 6:94 | 6:94 | 0:100 | 0:100 | 0:100 | 100:0 | 100:0 | 100:0 | 12:88 | 9:91 |
| Mass ratio between plant-derived and petroleum-derived PE resins (plant-derived:petroleum-derived) | 10:90 | 10:90 | 60:40 | 50:50 | 100:0 | 0:100 | - | - | - | 0:100 | 0:100 | 0:100 | 0:100 | 0:100 |
| True density of each resin composition [g/cm$^3$] | 1.07 | 1.01 | 1.01 | 0.91 | 1.29 | 1.29 | 0.90 | 0.96 | 1.35 | 1.66 | 1.07 | 1.01 | 1.02 | 1.29 |

<Example 1>

The pellets of the resin composition A described above were fed to an extruder of which cylinder temperature was set to 230°C, melted and kneaded in the extruder, and then extruded from a die into a sheet shape. The extruded sheet was cooled with cooling rolls to thereby obtain an unstretched sheet. Then, this unstretched sheet was heated again to 120°C and stretched to 4.8 times in the sheet flow direction (MD) by use of the speed difference between the rolls. The stretched sheet was subjected to an annealing treatment at 140°C to obtain a longitudinally-stretched resin film.
The edge parts of the longitudinally-stretched resin film obtained were slit to obtain a stretched porous film of Example 1, which has a uniaxially-stretched single-layer structure having a thickness of 110 $\mu$m, a density of 1.53 g/cm$^3$, and a porosity of 8%.

<Example 12 and Comparative Examples 6 and 8>

Stretched porous films of Example 12 and Comparative Examples 6 and 8 were obtained in the same manner as in Example 1 except that the resin composition used was replaced by the pellets of each of the resin compositions O, X, and Y in Example 1 described above.

<Example 2>

The pellets of the resin composition B described above were fed to an extruder of which cylinder temperature was set to 230°C, melted and kneaded in the extruder, and then extruded from a die into a sheet shape. The extruded sheet was cooled with cooling rolls to thereby obtain an unstretched sheet. Then, this unstretched sheet was heated again to 120°C and stretched to 4.8 times in the sheet flow direction (MD) by use of the speed difference between the rolls to obtain a longitudinally-stretched resin film.
The longitudinally-stretched resin film obtained was cooled to 60°C, then heated again to 120°C, and stretched to 9 times in the sheet width direction (TD) using a tenter. Then, the stretched film was subjected to an annealing treatment at 140°C and cooled again to 60°C. Thereafter, the edge parts of the longitudinally-stretched resin film obtained were slit to obtain a stretched porous film of Example 2, which has a biaxially-stretched single-layer structure having a thickness of 110 $\mu$m, a density of 1.08 g/cm$^3$, and a porosity of 4%.

<Examples 3 and 4 and Comparative Example 1>

Stretched porous films of Examples 3 and 4 and Comparative Example 1 were obtained in the same manner as in Example 2 except that the resin composition used was replaced by the pellets of each of the resin compositions D, E, and C in Example 2 described above.

<Example 5>

The pellets of the resin composition F obtained in the production example described above were fed to an extruder of which cylinder temperature was set to 270°C, melted and kneaded in the extruder, and then extruded from a die into a sheet shape. The extruded sheet was cooled with cooling rolls to thereby obtain an unstretched sheet. Then, this unstretched sheet was heated again to 150°C and stretched 4.8 times in the sheet flow direction (MD) by use of the speed difference between the rolls to obtain a longitudinally-stretched resin film.
The longitudinally-stretched resin film obtained was cooled to 60°C, then heated again to 150°C, and stretched to 9 times in the sheet width direction (TD) using a tenter. Then, the stretched film was subjected to an annealing treatment at 165°C and cooled again to 60°C. Thereafter, the edge parts of the longitudinally-stretched resin film obtained were slit to obtain a stretched porous film of Example 5, which has a biaxially-stretched single-layer structure having a thickness of 110 $\mu$m, a density of 0.75 g/cm$^3$, and a porosity of 30%.
<Examples 6 and 8 to 11 and Comparative Examples 4, 5, and 7>
Stretched porous films of Examples 6 and 8 to 11 and Comparative Examples 4, 5, and 7 were obtained in the same manner as in Example 5 except that the resin composition used was replaced by the pellets of each of the resin compositions G, J, K, M, N, L, R, and I in Example 5 described above.

<Example 7>

The pellets of the resin composition H described above were fed to an extruder of which cylinder temperature was set to 270°C, melted and kneaded in the extruder, and extruded from a die into a sheet shape. The extruded sheet was cooled with cooling rolls to thereby obtain an unstretched sheet. Then, this unstretched sheet was heated again to 150°C and stretched to 4.8 times in the sheet flow direction (MD) by use of the speed difference between the rolls to obtain a longitudinally-stretched resin film.

Separately from this, the pellets of the resin composition S were fed to two extruders of which cylinder temperature was set to 270°C. The resin composition S was melted and kneaded in each extruder and extruded separately from a die into a sheet shape for extrusion-lamination on both the faces of the longitudinally-stretched resin film obtained in the step described above. This provided a three-layer laminate sheet having a lamination structure of resin composition S/resin composition H/ resin composition S.

The three-layer laminate sheet obtained was cooled to 60°C, then heated again to 150°C, and stretched to 9 times in the sheet width direction (TD) using a tenter. Then, the stretched film was subjected to an annealing treatment at 165°C and cooled again to 60°C. Thereafter, the edge parts were slit to obtain a stretched porous film of Example 7.

The stretched porous film of Example 7 had three-layer structure (uniaxially-stretched/biaxiallystretched/uniaxially-stretched), the total thickness was 110 $\mu$m, the thickness of each layer was 18 $\mu$m/74 $\mu$m/18 $\mu$m, the total density was 0.74 g/cm$^3$, and the total porosity was 37%.

<Example 14>

A stretched porous film of Example 14 was obtained in the same manner as in Example 7 except that the resin composition H was replaced by the pellets of resin composition Q and the resin composition S was replaced by the pellets of the resin composition N in Example 7 described above.

<Example 15>

A stretched porous film of Example 15 was obtained in the same manner as in Example 7 except that the resin composition H was replaced by the pellets of the resin composition F in Example 7 described above.

<Comparative Example 3>

A stretched porous film of Comparative Example 3 was obtained in the same manner as in Example 7 except that the resin composition H was replaced by the pellets of resin composition I and the resin composition S was replaced by the pellets of the resin composition T in Example 7 described above.

<Comparative Example 10>

A stretched porous film of Comparative Example 10 was obtained in the same manner as in Example 7 except that the resin composition H was replaced by the pellets of resin composition AA and the resin composition S was replaced by the pellets of the resin composition AB in Example 7 described above.

<Example 13>

The pellets of the resin compositions P and U described above were fed to three extruders of which cylinder temperature was set to 270°C, and each melted and kneaded in the extruders. The melt and kneaded products were fed to one coextrusion die and laminated inside the die. The resin compositions P and U each laminated were extruded from the die into a sheet shape, and this sheet was cooled with cooling rolls to obtain an unstretched sheet having a three-layer structure of resin composition U/ resin composition P/resin composition U. This unstretched sheet was heated again to 150°C and stretched to 4.8 times in the sheet flow direction (MD) by use of the speed difference between the rolls to obtain a longitudinally-stretched resin film.

The longitudinally-stretched resin film obtained was cooled to 60°C, then heated again to 150°C, and stretched to 9 times in the sheet width direction (TD) using a tenter. Then, the stretched film was subjected to an annealing treatment at 165°C and cooled again to 60°C. Thereafter, the edge parts were slit to obtain a stretched porous film of Example 13.

The stretched porous film of Example 13 had a three-layer structure (biaxially-stretched/biaxiallystretched/biaxially-stretched), the total thickness was 110 $\mu$m, the thickness of each layer was 9 $\mu$m/92 $\mu$m/9 $\mu$m, the total density was 0.94 g/cm$^3$, and the total porosity was 6%.

<Comparative Example 9>

A stretched porous film of Comparative Example 9 was obtained in the same manner as in Example 13 except that the resin composition P was replaced by the pellets of the resin composition Z in Example 13 described above.

<Comparative Example 2>

The pellets of the resin composition G obtained in the manufacturing example described above were fed to an extruder of which cylinder temperature was set to 230°C, melted and kneaded in the extruder, and extruded from a die into a sheet shape. The extruded sheet was cooled with cooling rolls to thereby obtain an unstretched sheet (cast sheet).

The edge parts of the unstretched sheet obtained were slit to obtain a stretched porous film of Comparative Example 2, which is in a single-layer structure having a thickness of 110 $\mu$m, a density of 1.07 g/cm$^3$, and a porosity of 0%.

(Measurement Method)

The physical properties of the stretched porous film of each of Examples and Comparative Examples described above were measured by the following measurement methods.

<Total Thickness>

The total thickness of the stretched porous film ($\mu$m) was measured using a constant pressured thickness measurement instrument (device name: PG-01J; manufactured by Teclock Corporation) in accordance with JIS K 7130:1999, "Plastic - Film and sheeting - Determination of thickness".

<Thickness of Each layer>

In the case where the stretched porous film has a multi-layer structure, the thickness of each layer ($\mu$m) was measured as follows.

The stretched porous film was cooled to a temperature of -60°C or less with liquid nitrogen. The sample placed on a glass plate was cut while a razor blade (trade name Proline Blade, manufactured by Schick Japan K. K.) was caused to abut perpendicular to the sample to thereby prepare a sample for cross section measurement. The cross section of the sample obtained was observed with a scanning electron microscope (device name: JSM-6490, manufactured by JEOL Ltd.), and the boundary lines between layers were distinguished from the compositional appearance to determine the thickness proportion of each layer in the stretched porous film. The total thickness measured above was multiplied by the thickness proportion of each layer to determine the thickness of each layer.

<Density>

The density of the entire stretched porous film (g/cm$^3$) was calculated from the thickness of the entire stretched porous film ($\mu$m) obtained above and the grammage of the entire stretched porous film (g/m$^2$) mentioned below by the following expression (1).

$$\texttt{Density (g/cm}^3\texttt{) = Grammage (g/m}^2\texttt{) / Thickness}$$

$$\texttt{(}\mu\texttt{m) ... (1)}$$

<Grammage>

The grammage of the entire stretched porous film described above (g/m$^2$) was determined by weighing a stretched porous film which had been punched out in a 100 mm $\times$ 100 mm size, with an electronic balance in accordance with the method described in JIS P 8124 and converting this value into a mass per 1 m$^2$.

<Porosity>

The porosity of the entire stretched porous film (%) can be determined from the ratio of the area occupied by pores in the cross section of the stretched porous film observed with an electron microscope.

Specifically, an optional portion of the stretched porous film to be measured was cut off, and the portion was embedded and solidified in an epoxy resin. Then, the stretched porous film to be measured was cut perpendicularly to the face direction of the film using a microtome, and affixed to a sample observation stage such that the cut face became a face to be observed. Gold, gold - palladium, or the like was vapor-deposited on the face to be observed. The cut face of the stretched porous film was observed in a scanning electron microscope at any magnification that facilitates the observation (e.g., magnification of 500 times to 3000 times), and the region observed was captured as image data. The image data obtained was subjected to image processing in an image analyzer, and the ratio of the area of pore portion in the predetermined region of the stretched porous film (%) was determined. The average value of the area ratios (%) determined at optional 10 points was taken as the porosity (%).

(Evaluation)

The stretched porous films of Examples and Comparative Examples were each subjected to the following evaluations.

<Curling Height>

The stretched porous film was cut to form a sheet 1 having a size of 636 mm in the flow direction (MD) and 469 mm in the width direction (TD) in molding the stretched porous film. Additionally, the stretched porous film was cut to form a sheet 2 having a size of 636 mm in the width direction (TD) and 469 mm in the flow direction (MD) in molding the stretched porous film. The sheet 1 and the sheet 2 were each rolled up in the longitudinal direction and accommodated in a paper pipe having an inner diameter of 55 mm to cause each sheet to be in a cylindrical shape having an outer diameter of 55 mm. Then, the sheets were left under an environment at a temperature of 23°C and a relative humidity of 50% for 24 hours.

Subsequently, the stretched porous films were each removed from the paper pipe, and the cylindrical sheet 1 and sheet 2 were unrolled such that each face inside in the radial direction faced upward, and placed on a horizontal plane. After a lapse of one hour under the environment at a temperature of 23°C and a relative humidity of 50%, the heights h at the four corners of each of the sheet 1 and the sheet 2 were measured, and the average value thereof was calculated and taken as the curling height (mm). As shown in Fig. 4, the height h is the distance (mm) from the horizontal plane to a corner of the sheet 51 to be measured.

<Effect of Preventing Curling>

After the curling height (mm) of each of the sheet 1 and the sheet 2 was determined, the ratio of the curling height (mm) between the stretched porous film of each Example and the stretched porous film of the Comparative Example to be compared therewith was determined with the curling height of the stretched porous film of the Comparative Example assumed to be 100. The curling height ratio determined was taken as the evaluation value indicating the effect of preventing curling.

<Carbon Dioxide ($CO_2$) Emission Factor of Resin Composition>

The $CO_2$ emission factor of each resin composition was determined from the blend ratio of each raw material using the $CO_2$ emission factor of each raw material composing each resin composition ($CO_2$ emission factors shown in Table 1) as the $CO_2$ emission factor at the stage of procuring raw materials. The $CO_2$ emission factors in Table 1 are values from the CFP Basic Database (domestic) and the data presented by the manufacturer.

<Effect of Preventing $CO_2$ Emissions (Mass Basis)>

The difference between the $CO_2$ emission factor in each resin composition composing the stretched porous film of each Example and the $CO_2$ emission factor in each resin composition composing the stretched porous film of the Comparative Example to be compared therewith was determined as an evaluation value indicating the effect of preventing the $CO_2$ emissions (unit: kg-$CO_2$/kg).

In the case where the stretched porous film has a multi-layer structure, values obtained by multiplying the $CO_2$ emission factor in the resin composition of each layer by the mass (grammage) ratio of each layer with respect to the whole were summed up, and the $CO_2$ emission factor in the stretched porous film in each of Examples was determined. Then, the difference from the $CO_2$ emission factor in the stretched porous film of the Comparative Example to be compared therewith, which was determined in the same manner, was determined as the evaluation value.

<Effect of Preventing $CO_2$ Emissions (Volume Basis)>

The $CO_2$ emission factor in each resin composition composing the stretched porous film of each Example was multiplied by the density of the stretched porous film (1000 kg/m$^3$) to determine the $CO_2$ emission factor (volume basis) in the stretched porous film of each Example. Subsequently, the difference from the $CO_2$ emission factor (volume basis) in the stretched porous film of the Comparative Example to be compared therewith, which was determined in the same manner, was determined as the evaluation value indicating the effect of preventing the $CO_2$ emissions (volume basis, unit: kg-$CO_2$/m$^3$).

In the case where the stretched porous film has a multi-layer structure, the $CO_2$ emission factor in the resin composition of each layer was multiplied with the density of each layer, and the resulting value and the volume (thickness) ratio of each layer with respect to the whole were summed up to determine the $CO_2$ emission factor (volume basis) in the stretched porous film in each Example. Then, the difference from the $CO_2$ emission factor (volume basis) in the stretched porous film in the Comparative Example to be compared therewith, determined in the same manner, was determined as the evaluation value.

The following Tables 4A and 4B show evaluation results.

[Table 4A]

| Stretched porous film | Configuration | | | | | | | | |
|---|---|---|---|---|---|---|---|---|---|
| | Number of layers | Resin composition | Number of stretching axes of each layer | Thickness of each layer [μm] | Inorganic filler content [% by mass] | Mass ratio between plant-derived and petroleum-derived PE resins [plant-derived: petroleum-derived] | Mass ratio between PE resin and PP resin [PE:PP] | Density [g/cm³] | Porosity [%] |
| Example 1 | Single layer | A | Uniaxial | 110 | 65 | 100:0 | 100:0 | 1.53 | 8 |
| Example 2 | Single layer | B | Biaxial | 110 | 23 | 100:0 | 100:0 | 1.08 | 4 |
| Example 3 | Single layer | D | Biaxial | 110 | 23 | 68:32 | 100:0 | 1.07 | 5 |
| Example 4 | Single layer | E | Biaxial | 110 | 23 | 32:68 | 100:0 | 1.06 | 6 |
| Example 5 | Single layer | F | Biaxial | 110 | 23 | 100:0 | 13:87 | 0.75 | 30 |
| Example 6 | Single layer | G | Biaxial | 110 | 23 | 50:50 | 13:87 | 0.74 | 31 |
| Example 7 | Three layers | S/H/S | Uniaxial/Biaxial/Uniaxial | 18/74/18 | 32 | 57:43 | 11:89 | 0.74 | 37 |
| Example 8 | Single layer | J | Biaxial | 110 | 23 | 9:91 | 29:71 | 0.77 | 29 |
| Example 9 | Single layer | K | Biaxial | 110 | 23 | 91:9 | 29:71 | 0.77 | 29 |
| Example 10 | Single layer | M | Biaxial | 110 | 8 | 55:45 | 22:78 | 0.86 | 11 |
| Example 11 | Single layer | N | Biaxial | 110 | 45 | 100:0 | 9:91 | 0.66 | 49 |
| Example 12 | Single layer | O | Uniaxial | 110 | 16 | 10:90 | 100:0 | 0.99 | 8 |
| Example 13 | Three layers | U/P/U | Biaxial/Biaxial/Biaxial | 9/92/9 | 7 | 10:90 | 84:16 | 0.94 | 6 |

(continued)

| Stretched porous film | Configuration | | | | | | | | |
|---|---|---|---|---|---|---|---|---|---|
| | Number of layers | Resin composition | Number of stretching axes of each layer | Thickness of each layer [μm] | Inorganic filler content [% by mass] | Mass ratio between plant-derived and petroleum-derived PE resins [plant-derived:petroleum-derived] | Mass ratio between PE resin and PP resin [PE:PP] | Density [g/cm³] | Porosity [%] |
| Example 14 | Three layers | N/Q/N | Uniaxial/Biaxial/Uniaxial | 18/74/18 | 27 | 71:29 | 11:89 | 0.67 | 50 |
| Example 15 | Three layers | S/F/S | Uniaxial/Biaxial/Uniaxial | 18/74/18 | 32 | 100:0 | 11:89 | 0.74 | 37 |
| Comp.Ex. 1 | Single layer | C | Biaxial | 110 | 23 | 0:100 | 100:0 | 1.09 | 3 |
| Comp.Ex. 2 | Single layer | G | Unstretched | 110 | 23 | 50:50 | 13:87 | 1.07 | 0 |
| Comp.Ex. 3 | Three layers | T/I/T | Uniaxial/Biaxial/Uniaxial | 18/74/18 | 32 | 0:100 | 11:89 | 0.75 | 36 |
| Comp.Ex. 4 | Single layer | L | Biaxial | 110 | 23 | 0:100 | 29:71 | 0.77 | 29 |
| Comp.Ex. 5 | Single layer | R | Biaxial | 110 | 0 | 50:50 | 13:87 | 0.91 | 0 |
| Comp.Ex. 6 | Single layer | X | Uniaxial | 110 | 65 | 0:100 | 100:0 | 1.53 | 8 |
| Comp.Ex. 7 | Single layer | I | Biaxial | 110 | 23 | 0:100 | 13:87 | 0.74 | 31 |
| Comp.Ex. 8 | Single layer | Y | Uniaxial | 110 | 16 | 0:100 | 100:0 | 0.99 | 8 |
| Comp.Ex. 9 | Three layers | U/Z/U | Biaxial/Biaxial/Biaxial | 9/92/9 | 7 | 0:100 | 84:16 | 0.97 | 6 |
| Comp.Ex. 10 | Three layers | AB/AA/AB | Uniaxial/Biaxial/Uniaxial | 18/74/18 | 27 | 0:100 | 11:89 | 0.68 | 48 |

[Table 4B]

| Stretched porous film | Curling height [mm] | | CO$_2$ emission factor (volume basis) [kg-CO$_2$/m$^3$] | Comparison with and Difference from Comparative Example | | | |
|---|---|---|---|---|---|---|---|
| | | | | Evaluation | | | |
| | Sheet 1 | Sheet 2 | | Effect of preventing curling (sheet 1) | Effect of preventing curling (sheet 2) | Effect of preventing CO$_2$ emissions [kg-CO$_2$/kg] | Effect of preventing CO$_2$ emissions [kg-CO$_2$/m$^3$] |
| Ex. 1 | 10 | 5.5 | -867.51 | 80 (in comparison with Comp. Ex. 6) | 79 (in comparison with Comp. Ex. 6) | -1.13 (in comparison with Comp. Ex. 6) | -1719.0 (in comparison with Comp. Ex. 6) |
| Ex. 2 | 6.5 | 11.25 | -1528.6 | 57 (in comparison with Comp. Ex. 1) | 60 (in comparison with Comp. Ex. 1) | -2.48 (in comparison with Comp. Ex. 1) | -2680.0 (in comparison with Comp. Ex. 1) |
| Ex. 3 | 7.75 | 14.25 | -655.8 | 67 (in comparison with Comp. Ex. 1) | 76 (in comparison with Comp. Ex. 1) | -1.67 (in comparison with Comp. Ex. 1) | -1807.2 (in comparison with Comp. Ex. 1) |
| Ex. 4 | 9.25 | 16 | 269.03 | 80 (in comparison with Comp. Ex. 1) | 85 (in comparison with Comp. Ex. 1) | -0.81 (in comparison with Comp. Ex. 1) | -882.3 (in comparison with Comp. Ex. 1) |
| Ex. 5 | 15.25 | 29.5 | 651.23 | 85 (in comparison with Comp. Ex. 7) | 88 (in comparison with Comp. Ex. 7) | -0.32 (in comparison with Comp. Ex. 7) | -228.9 (in comparison with Comp. Ex. 7) |
| Ex. 6 | 16 | 30.75 | 742.22 | 89 (in comparison with Comp. Ex. 7) | 92 (in comparison with Comp. Ex. 7) | -0.19 (in comparison with Comp. Ex. 7) | -137.9 (in comparison with Comp. Ex. 7) |
| Ex. 7 | 13.5 | 33.75 | 695.91 | 83 (in comparison with Comp. Ex. 3) | 83 (in comparison with Comp. Ex. 3) | -0.13 (in comparison with Comp. Ex. 3) | -97.2 (in comparison with Comp. Ex. 3) |
| Ex. 8 | 13.5 | 26.5 | 831.68 | 96 (in comparison with Comp. Ex. 4) | 96 (in comparison with Comp. Ex. 4) | -0.06 (in comparison with Comp. Ex. 4) | -49.4 (in comparison with Comp. Ex. 4) |
| Ex. 9 | 12 | 23.75 | 386.77 | 86 (in comparison with Comp. Ex. 4) | 86 (in comparison with Comp. Ex. 4) | -0.64 (in comparison with Comp. Ex. 4) | -494.3 (in comparison with Comp. Ex. 4) |
| Ex. 10 | 11.5 | 20.25 | 857.33 | 82 (in comparison with Comp. Ex. 4) | 74 (in comparison with Comp. Ex. 4) | -0.11 (in comparison with Comp. Ex. 4) | -23.8 (in comparison with Comp. Ex. 4) |

(continued)

| Stretched porous film | Curling height [mm] | | CO$_2$ emission factor (volume basis) [kg-CO$_2$/m$^3$] | Evaluation | | | |
|---|---|---|---|---|---|---|---|
| | | | | Comparison with and Difference from Comparative Example | | | |
| | Sheet 1 | Sheet 2 | | Effect of preventing curling (sheet 1) | Effect of preventing curling (sheet 2) | Effect of preventing CO$_2$ emissions [kg-CO$_2$/kg] | Effect of preventing CO$_2$ emissions [kg-CO$_2$/m$^3$] |
| Ex.11 | 12.75 | 23 | 471.24 | 91 (in comparison with Comp. Ex. 4) | 84 (in comparison with Comp. Ex. 4) | -0.43 (in comparison with Comp. Ex. 4) | -409.9 (in comparison with Comp. Ex. 4) |
| Ex. 12 | 14 | 8.25 | 873.97 | 81 (in comparison with Comp. Ex. 8) | 87 (in comparison with Comp. Ex. 8) | -0.26 (in comparison with Comp. Ex. 8) | -254.2 (in comparison with Comp. Ex. 8) |
| Ex. 13 | 6.5 | 12.25 | 997.65 | 84 (in comparison with Comp. Ex. 9) | 86 (in comparison with Comp. Ex. 9) | -0.24 (in comparison with Comp. Ex. 9) | -237.7 (in comparison with Comp. Ex. 9) |
| Ex. 14 | 12 | 31.5 | 622.52 | 80 (in comparison with Comp. Ex. 10) | 91 (in comparison with Comp. Ex. 10) | -0.12 (in comparison with Comp. Ex. 10) | -121.2 (in comparison with Comp. Ex. 10) |
| Ex. 15 | 12.75 | 32 | 618.87 | 78 (in comparison with Comp. Ex. 3) | 79 (in comparison with Comp. Ex. 3) | -0.24 (in comparison with Comp. Ex. 3) | -174.2 (in comparison with Comp. Ex. 3) |
| Comp. Ex. 1 | 11.5 | 18.75 | 1151.37 | | | | |
| Comp. Ex. 2 | 4.25 | 3.5 | 1074.77 | | | | |
| Comp. Ex. 3 | 16.25 | 40.5 | 793.06 | | | | |
| Comp. Ex. 4 | 14 | 27.5 | 881.11 | | | | |
| Comp. Ex. 5 | 4 | 6.5 | 1143.72 | | | | |
| Comp. Ex. 6 | 12.5 | 7 | 851.45 | | | | |
| Comp. Ex. 7 | 18 | 33.5 | 880.08 | | | | |
| Comp. Ex. 8 | 17.25 | 9.5 | 1128.2 | | | | |
| Comp. Ex. 9 | 7.75 | 14.25 | 1235.34 | | | | |
| Comp. Ex. 10 | 15 | 34.5 | 743.74 | | | | |

As shown in Tables 4A and 4B, it can be seen that any of the stretched porous films of Examples has slighter curling than that of Comparative Examples and exhibits the higher effect of preventing curling. It can be also seen that the effect of preventing $CO_2$ emissions is a negative value and thus Examples give smaller $CO_2$ emissions than those in Comparative Examples.

(Example II)

<Example 101>

(i) A resin composition H was prepared by mixing 67 parts by mass of a propylene homopolymer (trade name: Novatec PP MA3, manufactured by Japan Polypropylene Corporation), 5.5 parts by mass of a high-density polyethylene resin of which raw material ethylene is petroleum-derived (trade name: Novatec HD HJ580N, manufactured by Japan Polyethylene Corporation), 4.5 parts by mass of a high-density polyethylene resin of which raw material ethylene is plant-derived (trade name: HDPE SHC7260, manufactured by Braskem S.A.), 22.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1.

(ii) Subsequently, the resin composition H was melted and kneaded in an extruder set to 270°C and extruded from a die into a sheet shape. This sheet was cooled with cooling rolls to obtain an unstretched sheet. Then, this unstretched sheet was heated again to 150°C and stretched to 4.8 times in the sheet flow direction (MD) by use of the speed difference between the rolls to obtain a longitudinally-stretched resin film.

(iii) Separately from this, a resin composition S was prepared by mixing 51.5 parts by mass of a propylene homopolymer (trade name: Novatec PP MA3, manufactured by Japan Polypropylene Corporation), 3.5 parts by mass of a high-density polyethylene resin of which raw material ethylene is plant-derived (trade name: HDPE SHC7260, manufactured by Braskem S.A.), 44.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1.

Additionally, a resin composition V was prepared by mixing 51 parts by mass of a polypropylene homopolymer (trade name: Novatec PP MA3, manufactured by Japan Polypropylene Corporation) and 49 parts by mass of an ethylene-cyclic olefin copolymer (trade name: APEL 6011T, manufactured by Mitsui Chemicals, Inc.) described in Table 1. Further, a resin composition W was prepared by mixing 50 parts by mass of a propylene homopolymer (trade name: Novatec PP MA3, manufactured by Japan Polypropylene Corporation), 49.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1.

(iv) The resin compositions S, V, and W were each melted and kneaded in a separate extruder set to 270°C and laminated inside the die in the order of S/V/W. Subsequently, extrusion-lamination was conducted by means of coextrusion from one die such that the layer of the resin composition S came in contact with one face of the longitudinally-stretched resin film obtained in the above step (ii) to thereby provide a four-layer laminate sheet having a lamination structure of resin composition H/resin composition S/resin composition V/resin composition W.

(v) Separately from this, the resin composition S, V and W were prepared in the same manner as in the step (iii).

(vi) The resin compositions S, V, and W prepared in (v) were each melted and kneaded in a separate extruder set to 270°C, and laminated inside the die in the order of S/V/W. Subsequently, extrusion-lamination was conducted by means of coextrusion from one die such that the layer of the resin composition S came in contact onto the face on the longitudinally-stretched resin film side (the resin composition H side) of the four-layer laminate sheet obtained in the above (iv) to thereby provide a seven-layer laminate sheet having a lamination structure of resin composition W/resin composition V/resin composition S/ resin composition H/resin composition S/resin composition V/resin composition W. In Example 101, the stretched porous film is a layer made of the resin composition H. The layer made of the resin composition S is the surface layer, the layer made of the resin composition V is the solvent attack preventing layer, and the layer made of the resin composition W is the printability improving layer.

(vii) The seven-layer laminate sheet obtained was cooled to 60°C, then heated again to 150°C, and stretched to 9 times in the sheet width direction (TD) using a tenter. The stretched sheet was subjected to an annealing treatment at 165°C. Thereafter, the annealed sheet was cooled again to 60°C, and then the edge parts were slit to obtain a film for printing of Example 101. The stretched porous film of Example 101 had a seven-layer structure (uniaxially-stretched/uniaxiallystretched/uniaxially-stretched/biaxiallystretched/uniaxially-stretched/uniaxiallystretched/uniaxially-stretched), the total thickness was 110 $\mu$m, and the thickness of each layer: W/V/S/H/S/V/W was 8 $\mu$m/4 $\mu$m/17

μm/52 μm/17 μm/4 μm/8 μm.

<Comparative Example 201>

A resin composition I was prepared by mixing 67 parts by mass of a propylene homopolymer (trade name: Novatec PP MA3, manufactured by Japan Polypropylene Corporation), 10 parts by mass of a high-density polyethylene resin of which raw material ethylene is petroleum-derived (trade name: Novatec HD HJ580N, manufactured by Japan Polyethylene Corporation), 22.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1. Additionally, a resin composition T was prepared by mixing 51.5 parts by mass of a propylene homopolymer (trade name: Novatec PP MA3, manufactured by Japan Polypropylene Corporation), 3.5 parts by mass of a high-density polyethylene resin of which raw material ethylene is petroleum-derived (trade name: Novatec HD HJ580N, manufactured by Japan Polyethylene Corporation), 44.5 parts by mass of heavy calcium carbonate particles (trade name: SOFTON 1800, manufactured by Bihoku Funka Kogyo Co., Ltd.), and 0.5 parts by mass of titanium dioxide particles (trade name: TIPAQUE CR-60, manufactured by Ishihara Sangyo Kaisha, Ltd.) described in Table 1.
A film for printing of Comparative Example 201 was obtained in the same manner as in Example 101 except that the resin composition H prepared in the step (i) and used in the step (ii) was replaced by the resin composition I and further, the resin composition S prepared in each of the steps (iii) and (v) and used in each of the steps (iv) and (vi) was replaced by the resin composition T in the film for printing of Example 101. In Comparative Example 201, the stretched porous film is a layer made of the resin composition I, and the surface layer is a layer made of the resin composition T.
The physical properties of the films for printing of Example 101 and Comparative Example 201 described above were measured in the same manner as in Example I.

[Table 5]

| | Resin composition of each layer | Number of stretching axes | Stretching ratio [times] | Thickness of each layer [μm] | Inorganic filler content [% by mass] | Density of each layer [g/cm³] | Total density [g/cm³] | Porosity of each layer [%] | Total porosity [%] |
|---|---|---|---|---|---|---|---|---|---|
| Example 101 | W | Uniaxial | 9 | 8 | | 1.00 | | 26.1 | |
| | V | Uniaxial | 9 | 4 | | 0.96 | | 0 | |
| | S | Uniaxial | 9 | 17 | | 0.91 | | 29.5 | |
| | H | Biaxial | 4.8 × 9 | 52 | 33.7 | 0.63 | 0.8 | 40.8 | 32.2 |
| | S | Uniaxial | 9 | 17 | | 0.91 | | 29.5 | |
| | V | Uniaxial | 9 | 4 | | 0.96 | | 0 | |
| | W | Uniaxial | 9 | 8 | | 1.00 | | 26.1 | |
| Comparative Example 201 | W | Uniaxial | 9 | 8 | | 1.00 | | 26.1 | |
| | V | Uniaxial | 9 | 4 | | 0.96 | | 0 | |
| | T | Uniaxial | 9 | 17 | | 0.91 | | 29.6 | |
| | I | Biaxial | 4.8 × 9 | 52 | 33.7 | 0.64 | 0.8 | 40.6 | 32.1 |
| | T | Uniaxial | 9 | 17 | | 0.91 | | 29.6 | |
| | V | Uniaxial | 9 | 4 | | 0.96 | | 0 | |
| | W | Uniaxial | 9 | 8 | | 1.00 | | 26.1 | |

(Evaluation of Curling Property)

The films for printing of Example 101 and Comparative Example 201 were subjected to evaluation of the curling property as follows.

The film for printing was cut into a size of 636 mm in the flow direction (MD) in molding the film for printing and 469 mm in the width direction (TD) in molding the film for printing to prepare Sheet 1. Additionally, the film for printing was cut into a size of 636 mm in the width direction (TD) when molding the film for printing and 469 mm in the machine direction (MD) when molding the film for printing to prepare Sheet 2. The sheets 1 and 2 were each rolled up in the longitudinal direction and accommodated in a paper pipe having an inner diameter of 55 mm to cause each sheet to be in a cylindrical shape having an outer diameter of 55 mm. Then, the sheets were left under an environment at a temperature of 23°C and a relative humidity of 50% for 24 hours.

Subsequently, the films for printing were each removed from the paper pipe, and the cylindrical sheets 1 and 2 were unrolled such that each face inside in the radial direction faced upward, and placed on a horizontal plane. After a lapse of one hour under the environment at a temperature of 23°C and a relative humidity of 50%, the heights h at the four corners of the sheets 1 and 2 were measured, and the average value thereof was calculated. As shown in Fig. 4, the height h is the distance (mm) from the horizontal plane to a corner of the sheet 51 to be measured. Of the height h of the sheet 1 rolled up in the flow direction (MD) and the height h of the sheet 2 rolled up in the width direction (TD), the larger curling, that is, the larger value of the height h was taken as the evaluation value indicating the curling property of each film for printing.

The following Table 6 shows the evaluation results.

[Table 6]

| | Curling property | | CO$_2$ emission factor (volume basis) [kg-CO$_2$/m$^3$] | Effect of preventing curling | | Effect of preventing CO$_2$ emissions (difference from Comparative Example 201) [kg-CO$_2$/m$^3$] |
|---|---|---|---|---|---|---|
| | Sheet 1 636 mm (MD) × 469 mm (TD) Height [mm] | Sheet 2 636 mm (TD) × 469 mm (MD) Height [mm] | | Sheet 1 (when Curling of Comparative Example 201 is taken as 100) | Sheet 2 (when Curling of Comparative Example 201 is taken as 100) | |
| Example 101 | 13.5 | 33.75 | 762.5 | 83 | 83 | -75.8 |
| Comparative Example 201 | 16.25 | 40.5 | 838.3 | | | |

As shown in Table 6, it can be seen from Examples that in both of the sheet 1, of which length direction is the MD, and the sheet 2, of which length direction is the TD, the film for printing that has a small height h and has slight curling can be obtained. It can be also seen that the effect of preventing CO$_2$ emissions is a negative value and thus Example gives smaller CO$_2$ emissions than those in Comparative Example.

The present application claims priority from Japanese Patent Application No. 2018-084916, a Japanese patent application filed on April, 26, 2018 and Japanese Patent Application No. 2019-024660, a Japanese patent application filed on February 14, 2019, and all the contents of the Japanese patent applications are incorporated herein by reference.

Reference Signs List

1, 10      stretched porous film
20a, 20b    film for printing
2         surface layer
3         printability improving layer
4         solvent attack preventing layer

**Claims**

1. A stretched porous film formed by stretching a resin composition comprising at least a polyethylene resin and an inorganic filler at least in a uniaxial direction, wherein the polyethylene resin comprises a plant-derived polyethylene resin.

2. The stretched porous film according to claim 1, wherein
the polyethylene resin is a mixture of the plant-derived polyethylene resin and a petroleum-derived polyethylene resin, and
the mass ratio between the plant-derived polyethylene resin and the petroleum-derived polyethylene resin in the mixture is 5:95 to 99:1.

3. The stretched porous film according to claim 1 or 2, wherein
the content of the inorganic filler in the stretched porous film is 3 to 70% by mass.

4. The stretched porous film according to any one of claims 1 to 3, wherein
the resin composition further comprises a polypropylene resin.

5. The stretched porous film according to claim 4, wherein
the mass ratio between the polyethylene resin and the polypropylene resin in the stretched porous film is 5:95 to 99:1.

6. The stretched porous film according to any one of claims 1 to 5, wherein
the stretched porous film has a porosity of 3 to 55%.

7. The stretched porous film according to any one of claims 1 to 6, having a multi-layer structure, wherein
at least one layer of the multi layers is a stretched porous film formed by stretching the resin composition comprising at least a polyethylene resin and an inorganic filler at least in a uniaxial direction.

8. The stretched porous film according to any one of claims 1 to 7, wherein
the stretched porous film formed by stretching the resin composition comprising at least a polyethylene resin and an inorganic filler at least in a uniaxial direction is a film stretched in biaxial directions.

9. A film for printing, comprising:

    the stretched porous film according to any one of claims 1 to 8, and
    a printability improving layer on at least one face of the stretched porous film.

Fig. 1

Fig. 2

Fig. 3

Fig. 4

## INTERNATIONAL SEARCH REPORT

| | International application No. |
|---|---|
| | PCT/JP2019/017617 |

**A. CLASSIFICATION OF SUBJECT MATTER**

Int.Cl. C08J9/00(2006.01)i, B32B5/18(2006.01)i, B32B27/20(2006.01)i, C08K3/00(2018.01)i, C08L23/06(2006.01)i, C08L23/12(2006.01)i

According to International Patent Classification (IPC) or to both national classification and IPC

**B. FIELDS SEARCHED**

Minimum documentation searched (classification system followed by classification symbols)

Int.Cl. C08J9/00-9/42, B32B1/00-43/00, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2015-151407 A (IDEMITSU UNITECH CO., LTD.) 24 August 2015, claims, paragraphs [0011], [0012], [0026]-[0030], examples 3-6 (Family: none) | 1-8<br>9 |
| Y<br>A | WO 2015/132812 A1 (YUPO CORPORATION) 11 September 2015, paragraphs [0099]-[0103]<br>& US 2015/0247017 A1, paragraphs [0135]-[0140] & CN 105102224 A & TW 201534472 A | 1-8<br>9 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.07.2019 | 06.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

# EP 3 786 220 A1

**INTERNATIONAL SEARCH REPORT**

International application No.

PCT/JP2019/017617

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 9-255824 A (NIPPON PETROCHEMICALS CO., LTD.) 30 September 1997, paragraphs [0066]-[0068]<br>(Family: none) | 1-8<br>9 |
| A | JP 2014-101432 A (IDEMITSU UNITECH CO., LTD.) 05 June 2014, paragraph [0027]<br>(Family: none) | 1-8 |
| E, X | JP 2019-119827 A (KOHJIN FILM & CHEMICALS CO., LTD.) 22 July 2019, claims, paragraphs [0009], [0010], [0021], [0027], [0035], [0040], examples<br>(Family: none) | 1-8 |

Form PCT/ISA/210 (continuation of second sheet) (January 2015)

**REFERENCES CITED IN THE DESCRIPTION**

**Patent documents cited in the description**

- JP 2001277449 A
- JP 6020976 B
- JP 2018084916 A
- JP 2019024660 A